# EUROPÄISCHE PATENTSCHRIFT

(11) **EP 3 610 296 B1**
(45) Veröffentlichungstag und Bekanntmachung des Hinweises auf die Patenterteilung: **16.08.2023**
(21) Anmeldenummer: 18707682.3
(22) Anmeldetag: 22.02.2018
(51) Int. Cl.: G01S 19/42, G01S 19/07

(54) **VERFAHREN ZUM BETREIBEN EINES KORREKTURDIENSTSYSTEMS, KORREKTURDIENSTSYSTEM, VERFAHREN ZUM BETREIBEN EINES SATELLITENGESTÜTZTEN NAVIGATIONSSYSTEMS UND SATELLITENGESTÜTZTES NAVIGATIONSSYSTEM**
METHOD FOR OPERATING A CORRECTION SERVICE SYSTEM, CORRECTION SERVICE SYSTEM, METHOD FOR OPERATING A SATELLITE-BASED NAVIGATION SYSTEM, AND A SATELLITE-BASED NAVIGATION SYSTEM
PROCÉDÉ DE FONCTIONNEMENT D'UN SYSTÈME DE SERVICE DE CORRECTION, SYSTÈME DE SERVICE DE CORRECTION, PROCÉDÉ D'EXPLOITATION D'UN SYSTÈME DE NAVIGATION À BASE DE SATELLITE ET SYSTÈME DE NAVIGATION À BASE DE SATELLITE

(30) Priorität: 12.04.2017 DE 102017206262
(43) Veröffentlichungstag der Anmeldung: 19.02.2020
(73) Patentinhaber: Robert Bosch GmbH, 70442 Stuttgart (DE)
(72) Erfinder: LANGER, Markus, 71679 Asperg (DE); STROBEL, Jens, 71691 Freiberg Am Neckar (DE)
(86) Internationale Anmeldenummer: PCT/EP2018/054452
(87) Internationale Veröffentlichungsnummer: WO 2018/188842

(56) Entgegenhaltungen:
- EP-A1- 3 106 897
- US-A- 5 884 220
- US-A1- 2014 085 139

## Beschreibung

Die Erfindung betrifft ein Verfahren zum Betreiben eines Korrekturdienstsystems und ein Korrekturdienstsystem. Die Erfindung betrifft weiterhin ein Verfahren zum Betreiben eines satellitengestützten Navigationssystems und ein satellitengestütztes Navigationssystem.

### Stand der Technik

Globale Navigationssatellitensysteme (GNSS) ermöglichen eine Bestimmung einer Position eines Nutzergeräts, beispielsweise einer Navigationseinheit, in einem Koordinatensystem. Dabei werden mittels des Nutzergeräts Laufzeiten empfangener Satellitensignale von Satelliten des globalen Navigationssatellitensystems ermittelt und daraus Strecken zwischen den jeweiligen Satelliten und dem Nutzergerät abgeleitet. Als Übertragungsgeschwindigkeit der Satellitensignale wird üblicherweise die Lichtgeschwindigkeit angenommen. Wenn bei der Übertragung Störungen auftreten, beispielsweise aufgrund bestimmter Bedingungen in der Ionosphäre oder der Troposphäre, kommt es unter anderem zu Laufzeitänderungen, wodurch sich Fehler bei der Positionsbestimmung ergeben können. Zur Berücksichtigung derartiger Störungen sind Korrekturdienste bekannt, welche mittels eines existierenden Netzes von stationären Referenzstationen in Abhängigkeit der jeweils empfangenen Satellitensignale und bekannter Koordinaten der jeweiligen Referenzstation Korrekturwerte ermitteln und diese Korrekturwerte Nutzergeräten bereitstellen. Mittels der Korrekturwerte sollen Fehler der beschriebenen Art bei der Positionsbestimmung der Nutzergeräte korrigiert werden. Es zeigt sich jedoch, dass aufgrund einer zu geringen Dichte des Netzes von Referenzstationen gebietsweise insbesondere ionosphärische und/oder troposphärische Störungen nicht oder nur teilweise erfasst und in Korrekturwerten berücksichtigt werden können. Eine Erfassung derartiger, bislang nicht oder nur teilweise erfasster Störungen könnte durch eine Verdichtung des existierenden Netzes von Referenzstationen realisiert werden. Dies wäre jedoch mit einem enormen Kostenaufwand verbunden und daher nicht wirtschaftlich.

Die Offenlegungsschrift US 2014/085139 A1 beschreibt ein Verfahren zum Betreiben eines Korrekturdienstsystems. Das Korrekturdienstsystem weist ein globales Netzwerk an Referenzstationen und ein regionales Netzwerk an Referenzstationen auf, wobei die Referenzstationen jeweils bekannte Koordinaten aufweisen.

### Offenbarung der Erfindung

Der Erfindung liegt die Aufgabe zugrunde, ein Verfahren zum Betreiben eines Korrekturdienstsystems, ein Korrekturdienstsystem, ein Verfahren zum Betreiben eines satellitengestützten Navigationssystems und ein satellitengestütztes Navigationssystem zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Betreiben eines Korrekturdienstsystems für ein zur Bestimmung einer Position von Nutzergeräten eingerichtetes satellitengestütztes Navigationssystem mit mehreren bekannte und feststehende Koordinaten aufweisenden Referenzstationen in einem Koordinatensystem geschaffen wird. Dabei werden eine erste Gruppe der mehreren Referenzstationen und mehrere Empfänger des Korrekturdienstsystems betrieben, um Satellitensignale mehrerer Satelliten des satellitengestützten Navigationssystems zu empfangen. In Abhängigkeit der durch die Referenzstationen der ersten Gruppe der mehreren Referenzstationen jeweils empfangenen Satellitensignale und der bekannten Koordinaten der jeweiligen Referenzstation der ersten Gruppe der mehreren Referenzstationen wird mindestens ein erster Korrekturwert ermittelt. Beispielsweise wird die erste Gruppe der mehreren Referenzstationen auf eine Abweichung zwischen jeweils mittels der empfangenen Satellitensignale bestimmten Koordinaten und den bekannten Koordinaten der jeweiligen Referenzstation überprüft, wobei in Abhängigkeit von einer erfassten Abweichung der mindestens eine erste Korrekturwert ermittelt wird. Eine solche Abweichung bezeichnet vorzugsweise eine Abweichung, welche insbesondere zu einer signifikant fehlerhaften Koordinatenermittlung mittels der empfangenen Satellitensignale der jeweiligen Referenzstation führt. Im Rahmen des erfindungsgemäßen Verfahrens wird mittels der von den mehreren Empfängern empfangenen Satellitensignale mindestens ein zweiter Korrekturwert ermittelt. In Abhängigkeit von dem mindestens einen ersten und dem mindestens einen zweiten Korrekturwert wird dann mindestens ein dritter Korrekturwert ermittelt. Der mindestens eine dritte Korrekturwert wird dann Nutzergeräten des satellitengestützten Navigationssystems zur Verfügung gestellt. Die Erfindung weist Vorteile gegenüber dem Stand der Technik auf. Dadurch, dass in Abhängigkeit von dem mindestens einen ersten und mindestens einen zweiten Korrekturwert der mindestens eine dritte Korrekturwert ermittelt und Nutzergeräten des satellitengestützten Navigationssystems zur Verfügung gestellt wird, können - insbesondere aufgrund einer zu geringen Dichte eines existierenden Netzes von Referenzstationen - bislang nicht oder nur teilweise erfasste Störungen bei der Übertragung der Satellitensignale erfasst und Korrekturwerte zur Berücksichtigung dieser Störungen bei einer Positionsbestimmung der Nutzergeräte vorgegeben werden. Eine Verdichtung des existierenden Netzes von Referenzstationen ist somit nicht erforderlich, wodurch entsprechende Kosten vermieden werden. Letztlich wird eine genauere Positionsbestimmung und Navigation von Nutzergeräten, erfindungsgemäß von Navigationseinheiten in Kraftfahrzeugen oder anderen mobilen Geräten, ermöglicht.

Der mindestens eine erste Korrekturwert wird daher insbesondere dann ermittelt, wenn dieser für eine fehlerfreie Positionsbestimmung gemäß einer bestimmungsgemäßen Verwendung des Korrekturdienstsystems erforderlich ist.

Die Ermittlung des mindestens einen ersten Korrekturwerts wird vorzugsweise mittels einer Datenverarbeitung des Korrekturdienstsystems durchgeführt. Mittels des mindestens einen ersten Korrekturwerts werden vorzugsweise jeweilige Uhrenfehler der mehreren Satelliten, jeweilige Bahndatenfehler der mehreren Satelliten und/oder bestimmte Bedingungen in der Ionosphäre, welche das Senden der Satellitensignale beeinträchtigen, korrigiert. Mittels des mindestens einen zweiten Korrekturwerts werden vorzugsweise jeweilige Uhrenfehler der mehreren Satelliten, jeweilige Bahndatenfehler der mehreren Satelliten, bestimmte Bedingungen in der Ionosphäre und/oder bestimmte Bedingungen in der Troposphäre, welche das Senden der Satellitensignale beeinträchtigen, korrigiert. Vorzugsweise werden der mindestens eine erste und der mindestens eine zweite Korrekturwert zusammengeführt, wobei der mindestens eine erste und der mindestens eine zweite Korrekturwert vorzugsweise miteinander kompatible Parameter aufweisen. Durch Zusammenführen des mindestens einen ersten und des mindestens einen zweiten Korrekturwerts wird somit vorzugsweise der mindestens eine dritte Korrekturwert ermittelt. Es ist vorzugsweise vorgesehen, dass mittels des mindestens einen dritten Korrekturwerts jeweilige Uhrenfehler der mehreren Satelliten, jeweilige Bahndatenfehler der mehreren Satelliten, bestimmte Bedingungen in der Ionosphäre und/oder bestimmte Bedingungen in der Troposphäre, welche das Senden der Satellitensignale beeinträchtigen, korrigiert. Die Ermittlung des mindestens einen dritten Korrekturwerts wird vorzugsweise mittels einer Datenverarbeitung des Korrekturdienstsystems durchgeführt, wobei der Datenverarbeitung der mindestens eine erste und der mindestens eine zweite Korrekturwert zur Verfügung gestellt werden. Der mindestens eine dritte Korrekturwert wird dann vorzugsweise den Nutzergeräten des satellitengestützten Navigationssystems zur Verfügung gestellt.

Gemäß dem weiter unten näher beschriebenen Verfahren zum Betreiben eines satellitengestützten Navigationssystems wird bevorzugt, dass der mindestens eine dritte Korrekturwert mittels der Nutzergeräte ermittelt wird. Vorzugsweise wird dann mittels der Nutzergeräte jeweils der mindestens eine dritte Korrekturwert zur Bestimmung der jeweils eigenen Position ermittelt. Vorzugsweise stellen die Nutzergeräte dann jeweils den ermittelten mindestens einen dritten Korrekturwert anderen Nutzergeräten zur Verfügung. In diesem Fall werden vorzugsweise der mindestens eine erste und der mindestens eine zweite Korrekturwert den Nutzergeräten zur Verfügung gestellt, wobei die Nutzergeräte in Abhängigkeit von dem mindestens einen ersten und mindestens einen zweiten Korrekturwert den mindestens einen dritten Korrekturwert ermitteln.

Gemäß einer bevorzugten Ausführungsform des Verfahrens werden mittels des mindestens einen zweiten Korrekturwerts Unstimmigkeiten bei dem Senden der Satellitensignale aufgrund bestimmter Bedingungen in der Ionosphäre oder der Troposphäre, besonders bevorzugt in der Ionosphäre und der Troposphäre, korrigiert. Alternativ oder zusätzlich werden vorzugsweise mittels des mindestens einen dritten Korrekturwerts Unstimmigkeiten bei dem Senden der Satellitensignale aufgrund bestimmter Bedingungen in der Ionosphäre oder der Troposphäre, besonders bevorzugt in der Ionosphäre und der Troposphäre, korrigiert. Eine Korrektur derartiger Unstimmigkeiten wird insbesondere durchgeführt, um eine genauere Positionsbestimmung für die Nutzergeräte zu realisieren. Durch Berücksichtigung der bestimmten Bedingungen in der Ionosphäre und/oder der Troposphäre wird die Qualität der Positionsbestimmung durch die Nutzergeräte in dem satellitengestützten Navigationssystem verbessert und deren Zuverlässigkeit gesteigert.

Bevorzugt werden Empfänger einer ersten Gruppe der mehreren Empfänger, welche erfindungsgemäß jeweils als eine hard- und/oder softwarebasierte Korrektureinrichtung des Korrekturdienstsystems, welche jeweils einem Nutzergerät zugeordnet ist, ausgebildet sind, dazu angesteuert, die empfangenen Satellitensignale auf ein unerwartetes Satellitensignal zu überwachen. Bei Erfassen eines unerwarteten Satellitensignals wird dann vorzugsweise eine Information bezüglich des unerwarteten Satellitensignals erzeugt. Unter Berücksichtigung der Information wird dann vorzugsweise der mindestens eine zweite Korrekturwert ermittelt. Alternativ oder zusätzlich wird vorzugsweise der mindestens eine zweite Korrekturwert nur unter Berücksichtigung der empfangenen Satellitensignale, welche von den jeweils als Korrektureinrichtung ausgebildeten Empfängern der ersten Gruppe der mehreren Empfänger empfangen werden, ermittelt. Vorzugsweise sind die Korrektureinrichtungen jeweils mit dem jeweils zugeordneten Nutzergerät kommunikationsverbunden. Weiterhin ist erfindungsgemäß vorgesehen, dass die Korrektureinrichtungen integral mit dem jeweils zugeordneten Nutzergerät ausgebildet sind. Das Zusammenspiel zwischen der Korrektureinrichtung und dem jeweils zugeordnetem Nutzergerät ist insbesondere folgendermaßen ausgestaltet: Mittels der Korrektureinrichtung ist es insbesondere vorgesehen, Eingangsdaten der zuvor beschriebenen Art, nämlich insbesondere die Information und/oder die empfangenen Satellitensignale, bereitzustellen, in Abhängigkeit derer der mindestens eine zweite und schließlich der mindestens eine dritte Korrekturwert, vorzugsweise mittels einer Datenverarbeitung, ermittelt werden. Der mindestens eine dritte Korrekturwert wird dann dem zugeordneten und/oder weiteren Nutzergeräten zur Verfügung gestellt. Mittels des Nutzergeräts ist es insbesondere vorgesehen, in Abhängigkeit von empfangenen Satellitensignalen der mehreren Satelliten und dem empfangenen mindestens einen dritten Korrekturwert die jeweils eigene Position zu bestimmen. Es ist vorzugsweise vorgesehen, dass entweder das Nutzergerät oder die zugeordnete Korrektureinrichtung, oder das Nutzergerät und die zugeordnete Korrektureinrichtung Satellitensignale empfangen. Mittels einer vorzugsweise jeweils vorgesehenen Kommunikationsverbindung zwischen dem Nutzergerät und der zugeordneten Korrektureinrichtung ist insbesondere eine Weiterleitung der empfangenen Satellitensignale an die jeweils andere dieser Einrichtungen möglich, so dass es ausreicht, wenn nur eine dieser beiden Einrichtungen Satellitensignale empfängt.

Im Rahmen des unten beschriebenen satellitengestützten Navigationssystems sind die Nutzergeräte vorzugsweise jeweils als Navigationseinheit in einem Kraftfahrzeug, Mobiltelefon, Tablet-Computer, Wearable, einer Mobileinheit oder in anderer Form ausbildet.

Ein unerwartetes Satellitensignal der angesprochenen Art ist insbesondere ein fehlerhaftes, unstimmiges oder zumindest teilweise fehlendes Satellitensignal. Die Erzeugung der Information bezüglich des unerwarteten Satellitensignals wird vorzugsweise jeweils mittels der Korrektureinrichtungen durchgeführt, wobei bevorzugt die Ermittlung des mindestens einen zweiten Korrekturwerts unter Berücksichtigung der Information jeweils mittels der Korrektureinrichtungen und zusätzlich oder alternativ mittels einer insbesondere als zentrale Datenverarbeitung ausgebildeten Datenverarbeitung des Korrekturdienstsystems, durchgeführt wird. Alternativ oder zusätzlich wird vorzugsweise die Erzeugung der Information bezüglich des unerwarteten Satellitensignals mittels einer insbesondere als zentrale Datenverarbeitung ausgebildeten Datenverarbeitung des Korrekturdienstsystems durchgeführt, wobei vorzugsweise die Ermittlung des mindestens einen zweiten Korrekturwerts unter Berücksichtigung der Information mittels der insbesondere als zentrale Datenverarbeitung ausgebildeten Datenverarbeitung des Korrekturdienstsystems durchgeführt wird. Alternativ oder zusätzlich wird vorzugsweise der mindestens eine zweite Korrekturwert unter Berücksichtigung der empfangenen Satellitensignale ermittelt, wobei insbesondere eine Überwachung der empfangenen Satellitensignale auf ein unerwartetes Satellitensignal und eine Erzeugung der Information bezüglich des unerwarteten Satellitensignals bei Erfassen desselben nicht durchgeführt wird. Vorzugsweise wird der mindestens eine zweite Korrekturwert unter Berücksichtigung der empfangenen Satellitensignale mittels der Korrektureinrichtungen durchgeführt. Alternativ oder zusätzlich wird vorzugsweise der mindestens eine zweite Korrekturwert unter Berücksichtigung der empfangenen Satellitensignale mittels einer insbesondere als zentrale Datenverarbeitung ausgebildeten Datenverarbeitung des Korrekturdienstsystems durchgeführt. Es kann also in vorteilhafter Weise insbesondere mittels einer Vielzahl von Korrektureinrichtungen der mindestens eine zweite Korrekturwert ermittelt werden, wodurch die Qualität des mindestens einen zweiten Korrekturwerts gesteigert werden.

Bevorzugt ist vorgesehen, dass in Abhängigkeit der durch Empfänger einer zweiten Gruppe der mehreren Empfänger, welche jeweils als eine Referenzstation aus einer zweiten Gruppe der mehreren Referenzstationen ausgebildet sind, jeweils empfangenen Satellitensignale und bekannten, insbesondere feststehenden Koordinaten der jeweiligen Empfänger der zweiten Gruppe der mehreren Empfänger der mindestens eine zweite Korrekturwert ermittelt wird. Vorzugsweise ist die zweite Gruppe der mehreren Empfänger zumindest teilweise verschieden von der ersten Gruppe der mehreren Empfänger. Bevorzugt ist die zweite Gruppe der mehreren Referenzstationen zumindest teilweise verschieden von der ersten Gruppe der mehreren Referenzstationen. Vorzugsweise wird der mindestens eine zweite Korrekturwert mittels einer Datenverarbeitung des Korrekturdienstsystems ermittelt. Beispielsweise werden die Empfänger der zweiten Gruppe der mehreren Empfänger auf eine Abweichung zwischen jeweils mittels der empfangenen Satellitensignale bestimmten Koordinaten und den bekannten Koordinaten der jeweiligen Empfänger überprüft, wobei in Abhängigkeit von einer erfassten Abweichung der mindestens eine zweite Korrekturwert ermittelt wird. Eine solche Abweichung ist insbesondere eine Abweichung, welche insbesondere die Ermittlung des mindestens einen zweiten Korrekturwerts für eine fehlerfreie Positionsbestimmung gemäß einer bestimmungsgemäßen Verwendung des Korrekturdienstsystems erforderlich macht. Auf diese Weise ist es möglich, ein insbesondere globales Netz von Referenzstationen der ersten Gruppe der mehreren Referenzstationen insbesondere lokal zu verdichten, indem mittels Referenzstationen der zweiten Gruppe der mehreren Referenzstationen der mindestens eine zweite Korrekturwert vorzugsweise durch eine Datenverarbeitung des Korrekturdienstsystems ermittelt wird. Auf diese Weise wird die Qualität der Positionsbestimmung der Nutzergeräte in dem satellitengestützten Navigationssystem verbessert.

Weiterhin ist bevorzugt vorgesehen, dass der mindestens eine zweite Korrekturwert jeweils für Satellitensignale eines oder mehrerer der mehreren Satelliten vorgegeben wird. Alternativ oder zusätzlich wird der mindestens eine dritte Korrekturwert jeweils für Satellitensignale eines oder mehrerer der mehreren Satelliten vorgegeben. Auf diese Weise ist es insbesondere möglich, eine Kommunikationsverbindung des Korrekturdienstsystems mit weiteren Systemen, welche insbesondere eine Korrektur einer Positionsbestimmung mittels des Korrekturdienstsystems verwenden, auf einfache Weise zu realisieren.

Bevorzugt wird der mindestens eine zweite Korrekturwert mittels mindestens eines Mittels, welches ausgewählt ist aus einer Gruppe bestehend aus einem Kommunikationssatelliten und einem Mobilfunknetz, den Nutzergeräten zur Verfügung gestellt. Alternativ oder zusätzlich wird der mindestens eine dritte Korrekturwert mittels mindestens eines Mittels, welches ausgewählt ist aus einer Gruppe bestehend aus dem Kommunikationssatelliten und dem Mobilfunknetz, den Nutzergeräten zur Verfügung gestellt. Der Kommunikationssatellit ist vorzugsweise ein Satellit der mehreren Satelliten des satellitengestützten Navigationssystems. Alternativ ist der Kommunikationssatellit verschieden von den mehreren Satelliten des satellitengestützten Navigationssystems. Auf diese Weise können durch Nutzung insbesondere bestehender Ressourcen, wie existierenden Kommunikationssatelliten oder existierenden Mobilfunknetzen, die Kosten des erfindungsgemäßen Verfahrens gering gehalten werden.

Das erfindungsgemäße Verfahren zum Betreiben eines satellitengestützten Navigationssystems mit den Merkmalen des Anspruchs 7 führt ebenfalls zu den oben genannten Vorteilen. Das Verfahren dient zum Betreiben eines satellitengestützten Navigationssystems mit mehreren Satelliten, mehreren Nutzergeräten und einem Korrekturdienstsystem, wobei das Korrekturdienstsystem mehrere bekannte und feststehende Koordinaten aufweisende Referenzstationen in einem Koordinatensystem und mehrere Empfänger aufweist. Eine erste Gruppe der mehreren Referenzstationen und mehrere Empfänger des Korrekturdienstsystems werden betrieben, um Satellitensignale mehrerer Satelliten des satellitengestützten Navigationssystems zu empfangen. In Abhängigkeit der durch die Referenzstationen der ersten Gruppe der mehreren Referenzstationen jeweils empfangenen Satellitensignale und der bekannten Koordinaten der jeweiligen Referenzstation der ersten Gruppe der mehreren Referenzstationen wird mindestens ein erster Korrekturwert ermittelt. Im Rahmen dieses Verfahrens ist vorgesehen, das erfindungsgemäße Verfahren zum Betreiben eines Korrekturdienstsystems durchzuführen.

Vorzugsweise wird mittels des erfindungsgemäßen Verfahrens zum Betreiben eines Korrekturdienstsystems ein Korrekturdienstsystem der nachfolgend beschriebenen Art betrieben.

Das erfindungsgemäße Korrekturdienstsystem mit den Merkmalen des Anspruchs 8 führt ebenfalls zu den oben genannten Vorteilen. Das erfindungsgemäße Korrekturdienstsystem weist mehrere bekannte und feststehende Koordinaten aufweisende Referenzstationen und mehrere Empfänger auf. Die mehreren Empfänger sind erfindungsgemäß zumindest teilweise als hard- und/oder softwarebasierte Korrektureinrichtungen, welche jeweils einem Nutzergerät eines satellitengestützten Navigationssystems zugeordnet sind, ausgebildet. Alternativ oder zusätzlich sind vorzugsweise die mehreren Empfänger zumindest teilweise als Referenzstationen des Korrekturdienstsystems ausgebildet. Das Korrekturdienstsystem ist dazu ausgebildet, das erfindungsgemäße Verfahren zum Betreiben eines Korrekturdienstsystems durchzuführen. Hierzu sind insbesondere zur Durchführung des erfindungsgemäßen Verfahrens programmierte Steuergeräte vorhanden, die vorzugsweise zur Ansteuerung der mehreren Referenzstationen und der mehreren Empfänger des erfindungsgemäßen Korrekturdienstsystems dem jeweiligen Gerät zugeordnet sind. Weiterhin sind insbesondere zur Durchführung des erfindungsgemäßen Verfahrens programmierte Steuergeräte vorhanden, die vorzugsweise zur Ansteuerung des mindestens einen Kommunikationssatelliten und/oder des mindestens einen Mobilfunknetzes und/oder einer Datenverarbeitung des erfindungsgemäßen Korrekturdienstsystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen Korrekturdienstsystems vorhanden.

Vorzugsweise wird mittels des erfindungsgemäßen Verfahrens zum Betreiben eines satellitengestützten Navigationssystems ein satellitengestütztes Navigationssystem der nachfolgend beschriebenen Art betrieben.

Das erfindungsgemäße satellitengestützte Navigationssystem mit den Merkmalen des Anspruchs 9 führt ebenfalls zu den oben genannten Vorteilen. Das erfindungsgemäße satellitengestützte Navigationssystem weist mehrere Satelliten, Nutzergeräte und das erfindungsgemäße Korrekturdienstsystem auf. Das satellitengestützte Navigationssystem ist dazu ausgebildet, das erfindungsgemäße Verfahren zum Betreiben eines satellitengestützten Navigationssystems durchzuführen. Hierzu sind insbesondere zur Durchführung des erfindungsgemäßen Verfahrens programmierte Steuergeräte vorhanden, die vorzugsweise zur Ansteuerung der mehreren Satelliten, der Nutzergeräte und des Korrekturdienstsystems des erfindungsgemäßen satellitengestützten Navigationssystems dem jeweiligen Gerät zugeordnet sind. Vorzugsweise sind zur Durchführung des erfindungsgemäßen Verfahrens programmierte Steuergeräte zur Ansteuerung weiterer für das Verfahren erforderlicher oder vorteilhafter Einrichtungen des erfindungsgemäßen satellitengestützten Navigationssystems vorhanden.

Die Erfindung wird im Folgenden anhand der Zeichnung näher erläutert. Dabei zeigen
- Figur 1: eine schematische Darstellung eines vorteilhaften Korrekturdienstsystems, und
- Figur 2: eine schematische Darstellung eines vorteilhaften Verfahrens zum Betreiben des Korrekturdienstsystems.

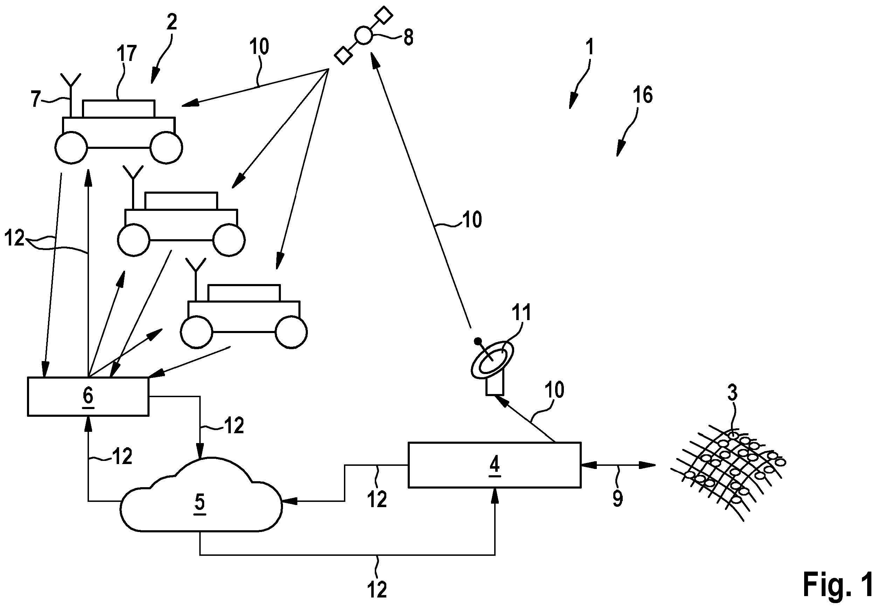

Figur 1 zeigt ein Ausführungsbeispiel eines Korrekturdienstsystems 1. Das Korrekturdienstsystem 1 ist Teil eines satellitengestützten Navigationssystems 16 zur Bestimmung einer Position von Nutzergeräten in einem Koordinatensystem. Das satellitengestützte Navigationssystem 16 weist weiterhin solche Nutzergeräte 2 auf. Der Übersichtlichkeit wegen ist nur eines der Nutzergeräte 2 mit einem Bezugszeichen versehen. Die Nutzergeräte 2 sind hier exemplarisch jeweils als Navigationseinheit in einem Kraftfahrzeug ausgebildet. Das satellitengestützte Navigationssystem 16 weist zudem mehrere - hier nicht dargestellte - Satelliten auf.

Das Korrekturdienstsystem 1 weist mehrere Referenzstationen 3 mit bekannten und feststehenden Koordinaten auf, welche vorzugsweise in einem Netz von Referenzstationen 3 angeordnet sind. Der Übersichtlichkeit wegen ist nur eine der Referenzstationen 3 mit einem Bezugszeichen versehen. Das Korrekturdienstsystem 1 weist zudem mehrere Empfänger auf. Die mehreren Empfänger sind erfindungsgemäß zumindest teilweise als hard- und/oder softwarebasierte Korrektureinrichtungen 17, welche jeweils einem der Nutzergeräte 2 zugeordnet sind, ausgebildet. Bei dem hier dargestellten Ausführungsbeispiel sind die Korrektureinrichtungen 17 erfindungsgemäß jeweils integral und/oder kommunikationsverbunden mit einem Nutzergerät 2 ausgebildet. Alternativ oder zusätzlich sind die mehreren Empfänger vorzugsweise zumindest teilweise als Referenzstationen 3 ausgebildet.

Das Korrekturdienstsystem 1 weist bei dem hier dargestellten Ausführungsbeispiel eine Datenverarbeitung 4 und einen Backend-Server 5 auf. Die Datenverarbeitung 4 ist hier als insbesondere zentrale Datenverarbeitung 4 ausgebildet. Weiterhin weist das Korrekturdienstsystem 1 vorzugsweise mindestens ein - hier genau ein - Mobilfunknetz 6 auf. Die Korrektureinrichtungen 17 und vorzugsweise die Nutzergeräte 2 sind jeweils über eine geeignete Sende- und Empfangseinrichtung 7 der Korrektureinrichtungen 17 in das Mobilfunknetz 6 eingebunden. Alternativ ist vorgesehen, dass die Sende- und Empfangseinrichtung 7 den Nutzergeräten 2 zugeordnet ist. Aufgrund der vorzugsweise vorgesehenen Kommunikationsverbindung zwischen den Korrektureinrichtungen 17 und den jeweils zugeordneten Nutzergeräten 2 ist vorzugsweise eine Einbindung der Korrektureinrichtungen 17 und der jeweils zugeordneten Nutzergeräte 2 in das Mobilfunknetz 6 gewährleistet. Zudem weist das Korrekturdienstsystem 1 vorzugsweise mindestens einen, hier genau einen, Kommunikationssatelliten 8 auf.

Bei diesem Ausführungsbeispiel ist zwischen den mehreren Referenzstationen 3 und der Datenverarbeitung 4 eine erste Kommunikationsverbindung 9 vorgesehen, mittels welcher die mehreren Referenzstationen 3 und die Datenverarbeitung 4 vorzugsweise kommunikationsverbunden sind. Mittels der ersten Kommunikationsverbindung 9 können vorzugsweise Daten und Informationen von den mehreren Referenzstationen 3 zu der Datenverarbeitung 4 gesendet werden. Vorzugsweise können auch Daten und Informationen von der Datenverarbeitung 4 zu den mehreren Referenzstationen 3 gesendet werden. Weiterhin ist vorzugsweise eine zweite Kommunikationsverbindung 10 zwischen der Datenverarbeitung 4 und den Nutzergeräten 2 vorgesehen. Hierbei ist insbesondere die Datenverarbeitung 4 mit mindestens einer - hier genau einer - Sendestation 11 des Korrekturdienstsystems 1 kommunikationsverbunden, wobei die Sendestation 11 mit dem Kommunikationssatelliten 8 kommunikationsverbunden ist, und wobei der Kommunikationssatellit 8 mit den Nutzergeräten 2 kommunikationsverbunden ist. Mittels der zweiten Kommunikationsverbindung 10 können vorzugsweise Daten und Informationen von der Datenverarbeitung 4 zu den Nutzergeräten 2 gesendet werden. Weiterhin ist bei diesem Ausführungsbeispiel vorzugsweise eine dritte Kommunikationsverbindung 12 zwischen der Datenverarbeitung 4 und den Korrektureinrichtungen 17 sowie den Nutzergeräten 2 vorgesehen. Hierbei ist insbesondere die Datenverarbeitung 4 mit dem Backend-Server 5 kommunikationsverbunden, wobei der Backend-Server 5 mit dem Mobilfunknetz 6 kommunikationsverbunden ist, und wobei das Mobilfunknetz 6 über die jeweiligen Sende- und Empfangseinrichtungen 7 mit den jeweiligen Korrektureinrichtungen 17 und den Nutzergeräten 2 kommunikationsverbunden ist. Mittels der dritten Kommunikationsverbindung 12 können vorzugsweise Daten und Informationen zwischen mindestens zwei Einrichtungen, welche ausgewählt sind aus einer Gruppe bestehend aus der Datenverarbeitung 4, dem Backend-Server 5, dem Mobilfunknetz 6, der Sende- und Empfangseinrichtung 7, den Korrektureinrichtungen 17 und den Nutzergeräten 2, insbesondere hin und her gesendet werden.

Das vorteilhafte Korrekturdienstsystem 1 ist dazu ausgebildet, ein Verfahren der nachfolgend beschriebenen Art durchzuführen.

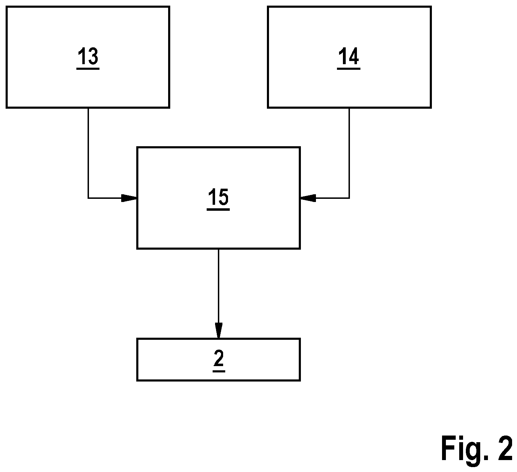

Figur 2 zeigt schematisch ein Verfahren zum Betreiben des vorteilhaften Korrekturdienstsystems 1 für das zur Bestimmung einer Position von Nutzergeräten 2 eingerichtete satellitengestützte Navigationssystem 16 mit mehreren bekannte und feststehende Koordinaten aufweisenden Referenzstationen 3 in einem Koordinatensystem. Gleiche und funktionsgleiche Elemente sind mit gleichen Bezugszeichen versehen, sodass insofern auf die vorangegangene Beschreibung verwiesen wird. Im Rahmen des vorteilhaften Verfahrens werden eine erste Gruppe der mehreren Referenzstationen 3 und mehrere Empfänger des Korrekturdienstsystems 1 betrieben, um Satellitensignale mehrerer Satelliten des satellitengestützten Navigationssystems 16 zu empfangen. In Abhängigkeit der durch die Referenzstationen 3 der ersten Gruppe der mehreren Referenzstationen 3 jeweils empfangenen Satellitensignale und der bekannten Koordinaten der jeweiligen Referenzstation 3 der ersten Gruppe der mehreren Referenzstationen 3 wird mindestens ein erster Korrekturwert 13 ermittelt. Mittels der von den mehreren Empfängern empfangenen Satellitensignale wird dann mindestens ein zweiter Korrekturwert 14 ermittelt. In Abhängigkeit von dem mindestens einen ersten Korrekturwert 13 und dem mindestens einen zweiten Korrekturwert 14 wird mindestens ein dritter Korrekturwert 15 ermittelt. Der mindestens eine dritte Korrekturwert 15 wird dann den Nutzergeräten 2 des satellitengestützten Navigationssystems 16 zur Verfügung gestellt.

Vorzugsweise werden mittels des mindestens einen zweiten Korrekturwerts 14 Unstimmigkeiten bei dem Senden der Satellitensignale aufgrund bestimmter Bedingungen in der Ionosphäre oder der Troposphäre, besonders bevorzugt in der Ionosphäre und der Troposphäre, korrigiert. Alternativ oder zusätzlich werden vorzugsweise mittels des mindestens einen dritten Korrekturwerts 15 Unstimmigkeiten bei dem Senden der Satellitensignale aufgrund bestimmter Bedingungen in der Ionosphäre oder der Troposphäre, besonders bevorzugt in der Ionosphäre und der Troposphäre, korrigiert.

Es ist bevorzugt vorgesehen, dass Empfänger einer ersten Gruppe der mehreren Empfänger, welche jeweils als eine hard- und/oder softwarebasierte Korrektureinrichtung 17 des Korrekturdienstsystems 1, welches jeweils einem Nutzergerät 2 zugeordnet ist, ausgebildet sind, dazu angesteuert werden, die empfangenen Satellitensignale auf ein unerwartetes Satellitensignal zu überwachen, wobei bei Erfassen eines unerwarteten Satellitensignals eine Information bezüglich des unerwarteten Satellitensignals erzeugt wird, und wobei unter Berücksichtigung der Information der mindestens eine zweite Korrekturwert 14 ermittelt wird. Alternativ oder zusätzlich wird bevorzugt der mindestens eine zweite Korrekturwert 14 nur unter Berücksichtigung der Satellitensignale ermittelt, welche von den jeweils als Korrektureinrichtung 17 ausgebildeten Empfängern der ersten Gruppe der mehreren Empfänger empfangen werden.

Vorzugsweise wird in Abhängigkeit der durch Empfänger einer zweiten Gruppe der mehreren Empfänger, welche jeweils als eine Referenzstation 3 aus einer zweiten Gruppe der mehreren Referenzstationen 3 ausgebildet sind, jeweils empfangenen Satellitensignale und bekannter, bevorzugt feststehender Koordinaten der jeweiligen Empfänger der zweiten Gruppe der mehreren Empfänger der mindestens eine zweite Korrekturwert 14 ermittelt. Besonders bevorzugt ist die zweite Gruppe der mehreren Empfänger zumindest teilweise verschieden von der ersten Gruppe der mehreren Empfänger. Besonders bevorzugt ist zudem die zweite Gruppe der mehreren Referenzstationen 3 zumindest teilweise verschieden von der ersten Gruppe der mehreren Referenzstationen 3.

Bei einem weiteren bevorzugten Ausführungsbeispiel ist vorgesehen, dass der mindestens eine zweite Korrekturwert 14 jeweils für Satellitensignale eines oder mehrerer der mehreren Satelliten vorgegeben wird. Alternativ oder zusätzlich wird vorzugsweise der mindestens eine dritte Korrekturwert 15 jeweils für Satellitensignale eines oder mehrerer der mehreren Satelliten vorgegeben.

Vorzugsweise wird der mindestens eine zweite Korrekturwert 14 mittels mindestens eines Mittels, welches ausgewählt ist aus einer Gruppe bestehend aus dem Kommunikationssatelliten 8 und dem Mobilfunknetz 6, den Nutzergeräten 2 zur Verfügung gestellt. Alternativ oder zusätzlich wird vorzugsweise der mindestens eine dritte Korrekturwert 15 mittels mindestens eines Mittels, welches ausgewählt ist aus einer Gruppe bestehend aus dem Kommunikationssatelliten 8 und dem Mobilfunknetz 6, den Nutzergeräten 2 zur Verfügung gestellt.

Vorzugsweise wird ein Verfahren der zuvor beschriebenen Art im Rahmen eines Verfahrens zum Betreiben eines satellitengestützten Navigationssystems 16 mit mehreren Satelliten, mehreren Nutzergeräten 2 und einem Korrekturdienstsystem 1, wobei das Korrekturdienstsystem 1 mehrere bekannte und feststehende Koordinaten aufweisende Referenzstationen 3 in einem Koordinatensystem und mehrere Empfänger aufweist, durchgeführt. Dabei werden eine erste Gruppe der mehreren Referenzstationen 3 und mehrere Empfänger des Korrekturdienstsystems 1 betrieben, um Satellitensignale mehrerer Satelliten des satellitengestützten Navigationssystems 16 zu empfangen. In Abhängigkeit der durch die Referenzstationen 3 der ersten Gruppe der mehreren Referenzstationen 3 jeweils empfangenen Satellitensignale und der bekannten Koordinaten der jeweiligen Referenzstation 3 der ersten Gruppe der mehreren Referenzstationen 3 wird mindestens ein erster Korrekturwert 13 ermittelt.

Insgesamt zeigt sich, dass mittels des vorteilhaften Verfahrens zum Betreiben des Korrekturdienstsystems 1 und durch das erfindungsgemäße Korrekturdienstsystem 1 eine genauere Positionsbestimmung und Navigation von Nutzergeräten 2 effektiv und kostengünstig realisiert werden kann.

## Patentansprüche

1. Verfahren zum Betreiben eines Korrekturdienstsystems (1) für ein zur Bestimmung einer Position von Nutzergeräten (2) eingerichtetes satellitengestütztes Navigationssystem (16), mit mehreren bekannte und feststehende Koordinaten aufweisenden Referenzstationen (3) in einem Koordinatensystem, wobei
- eine erste Gruppe der mehreren Referenzstationen (3) und mehrere Empfänger des Korrekturdienstsystems (1) betrieben werden, um Satellitensignale mehrerer Satelliten des satellitengestützten Navigationssystems (16) zu empfangen, wobei
- in Abhängigkeit der durch die Referenzstationen der ersten Gruppe der mehreren Referenzstationen (3) jeweils empfangenen Satellitensignale und der bekannten Koordinaten der jeweiligen Referenzstation (3) der ersten Gruppe der mehreren Referenzstationen (3) mindestens ein erster Korrekturwert (13) ermittelt wird,
**dadurch gekennzeichnet, dass**
- mittels der von den mehreren zumindest teilweise als hard- und/oder softwarebasierte Korrektureinrichtungen (17), welche jeweils einem der als Navigationseinheiten in Kraftfahrzeugen oder anderen mobilen Geräten ausgebildeten Nutzergeräte (2) zugeordnet und integral mit dem jeweils zugeordneten Nutzergerät (2) ausgebildet sind, ausgebildeten Empfängern empfangenen Satellitensignale mindestens ein zweiter Korrekturwert (14) ermittelt wird, wobei
- in Abhängigkeit von dem mindestens einen ersten und dem mindestens einen zweiten Korrekturwert (13,14) mindestens ein dritter Korrekturwert (15) ermittelt wird, und wobei
- der mindestens eine dritte Korrekturwert (15) Nutzergeräten (2) des satellitengestützten Navigationssystems (16) zur Verfügung gestellt wird.

2. Verfahren nach Anspruch 1, **dadurch gekennzeichnet, dass** mittels des mindestens einen zweiten und/oder dritten Korrekturwerts (14,15) Unstimmigkeiten bei dem Senden der Satellitensignale aufgrund bestimmter Bedingungen in der Ionosphäre und/oder der Troposphäre korrigiert werden.

3. Verfahren nach einem der vorhergehenden Ansprüche, **dadurch gekennzeichnet, dass**
- Empfänger einer ersten Gruppe der mehreren Empfänger, welche jeweils als eine hard- und/oder softwarebasierte Korrektureinrichtung (17) des Korrekturdienstsystems (1), welche jeweils einem Nutzergerät (2) zugeordnet ist, ausgebildet sind, dazu angesteuert werden, die empfangenen Satellitensignale auf ein unerwartetes Satellitensignal zu überwachen, wobei bei Erfassen eines unerwarteten Satellitensignals eine Information bezüglich des unerwarteten Satellitensignals erzeugt wird, und wobei unter Berücksichtigung der Information der mindestens eine zweite Korrekturwert (14) ermittelt wird, und/oder
- der mindestens eine zweite Korrekturwert (14) nur unter Berücksichtigung der von den jeweils als Korrektureinrichtung (17) ausgebildeten Empfängern der ersten Gruppe der mehreren Empfänger empfangenen Satellitensignale ermittelt wird.

4. Verfahren nach einem der vorhergehenden Ansprüche, **dadurch gekennzeichnet, dass** in Abhängigkeit der durch Empfänger einer zweiten, von der ersten Gruppe zumindest teilweise verschiedenen Gruppe der mehreren Empfänger, welche jeweils als eine Referenzstation (3) aus einer zweiten, von der ersten Gruppe zumindest teilweise verschiedenen Gruppe der mehreren Referenzstationen (3) ausgebildet sind, jeweils empfangenen Satellitensignale und bekannter Koordinaten der jeweiligen Empfänger der zweiten Gruppe der mehreren Empfänger der mindestens eine zweite Korrekturwert (14) ermittelt wird.

5. Verfahren nach einem der vorhergehenden Ansprüche, **dadurch gekennzeichnet, dass** der mindestens eine zweite und/oder dritte Korrekturwert (14,15) jeweils für Satellitensignale eines oder mehrerer der mehreren Satelliten vorgegeben wird.

6. Verfahren nach einem der vorhergehenden Ansprüche, **dadurch gekennzeichnet, dass** der mindestens eine zweite und/oder dritte Korrekturwert (14,15) mittels mindestens eines Kommunikationssatelliten (8) und/oder mindestens eines Mobilfunknetzes (6) den Nutzergeräten (2) zur Verfügung gestellt wird.

7. Verfahren zum Betreiben eines satellitengestützten Navigationssystems (16) mit mehreren Satelliten, mehreren Nutzergeräten (2) und einem Korrekturdienstsystem (1), wobei das Korrekturdienstsystem (1) mehrere bekannte und feststehende Koordinaten aufweisende Referenzstationen (3) in einem Koordinatensystem und mehrere Empfänger aufweist, wobei
- eine erste Gruppe der mehreren Referenzstationen (3) und mehrere Empfänger des Korrekturdienstsystems (1) betrieben werden, um Satellitensignale mehrerer Satelliten des satellitengestützten Navigationssystems (16) zu empfangen, wobei
- in Abhängigkeit der durch die Referenzstationen (3) der ersten Gruppe der mehreren Referenzstationen (3) jeweils empfangenen Satellitensignale und der bekannten Koordinaten der jeweiligen Referenzstation (3) der ersten Gruppe der mehreren Referenzstationen (3) mindestens ein erster Korrekturwert (13) ermittelt wird,
**dadurch gekennzeichnet, dass**
ein Verfahren zum Betreiben eines Korrekturdienstsystems (1) nach einem der Ansprüche 1 bis 6 durchgeführt wird.

8. Korrekturdienstsystem (1), mit
- mehreren bekannte und feststehende Koordinaten aufweisenden Referenzstationen (3), und
- mehreren zumindest teilweise als hard- und/oder softwarebasierte Korrektureinrichtungen (17), welche jeweils einem als Navigationseinheit in Kraftfahrzeugen oder anderen mobilen Geräten ausgebildeten Nutzergerät (2) eines Satellitengestützten Navigationssystems (16) zugeordnet und integral mit dem jeweils zugeordneten Nutzergerät (2) ausgebildet sind, ausgebildeten Empfängern,
**dadurch gekennzeichnet, dass** das Korrekturdienstsystem (1) dazu ausgebildet ist, ein Verfahren nach einem der Ansprüche 1 bis 6 durchzuführen.

9. Satellitengestütztes Navigationssystem (16), mit
- mehreren Satelliten,
- Nutzergeräten (2), und
- einem Korrekturdienstsystem (1) nach Anspruch 8.

## Claims

1. Method for operating a correction service system (1) for a satellite-assisted navigation system (16) designed to determine a position of user devices (2), having multiple reference stations (3) that have known and fixed coordinates in a coordinate system, wherein
- a first group of the multiple reference stations (3) and multiple receivers of the correction service system (1) are operated to receive satellite signals from multiple satellites of the satellite-assisted navigation system (16), wherein
- the satellite signals received by each of the reference stations in the first group of the multiple reference stations (3) and the known coordinates of the respective reference station (3) in the first group of the multiple reference stations (3) are taken as a basis for ascertaining at least one first correction value (13),
**characterized in that**
- the satellite signals received by the multiple receivers, at least some of which are in the form of hardware- and/or software-based correction devices (17) that are each associated with one of the user devices (2) in the form of navigation units in motor vehicles or other mobile devices and are formed integrally with the respective associated user device (2), are used to ascertain at least one second correction value (14), wherein
- the at least one first and the at least one second correction value (13, 14) are taken as a basis for ascertaining at least one third correction value (15), and wherein
- the at least one third correction value (15) is made available to user devices (2) of the satellite-assisted navigation system (16).

2. Method according to Claim 1, **characterized in that** the at least one second and/or third correction value (14, 15) is used to correct inconsistencies when transmitting the satellite signals on the basis of specific conditions in the ionosphere and/or the troposphere.

3. Method according to either of the preceding claims, **characterized in that**
- receivers in a first group of the multiple receivers, which are each in the form of a hardware- and/or software-based correction device (17), associated with a respective user device (2), of the correction service system (1), are actuated to monitor the received satellite signals for an unexpected satellite signal, wherein detection of an unexpected satellite signal results in information about the unexpected satellite signal being produced, and wherein the information is taken into consideration to ascertain the at least one second correction value (14), and/or
- the at least one second correction value (14) is ascertained only by taking into consideration the satellite signals received by the receivers in the first group of the multiple receivers, which are each in the form of a correction device (17).

4. Method according to one of the preceding claims, **characterized in that** each of the satellite signals received by receivers in a second group, at least part of which is different from the first group, of the multiple receivers, which are each in the form of a reference station (3) from a second group, at least part of which is different from the first group, of the multiple reference stations (3), and known coordinates of the respective receivers in the second group of the multiple receivers are taken as a basis for ascertaining the at least one second correction value (14) .

5. Method according to one of the preceding claims, **characterized in that** each of the at least one second and/or third correction value (14, 15) is predefined for satellite signals from one or more of the multiple satellites.

6. Method according to one of the preceding claims, **characterized in that** the at least one second and/or third correction value (14, 15) is made available to the user devices (2) by means of at least one communication satellite (8) and/or at least one mobile radio network (6).

7. Method for operating a satellite-assisted navigation system (16) having multiple satellites, multiple user devices (2) and a correction service system (1), the correction service system (1) comprising multiple reference stations (3) that have known and fixed coordinates in a coordinate system and multiple receivers, wherein
- a first group of the multiple reference stations (3) and multiple receivers of the correction service system (1) are operated to receive satellite signals from multiple satellites of the satellite-assisted navigation system (16), wherein
- the satellite signals received by each of the reference stations (3) in the first group of the multiple reference stations (3) and the known coordinates of the respective reference station (3) in the first group of the multiple reference stations (3) are taken as a basis for ascertaining at least one first correction value (13),
**characterized in that**
a method for operating a correction service system (1) according to one of Claims 1 to 6 is carried out.

8. Correction service system (1), having
- multiple reference stations (3) that have known and fixed coordinates, and
- multiple receivers, at least some of which are in the form of hardware- and/or software-based correction devices (17) that are each associated with a user device (2), in the form of a navigation unit in motor vehicles or other mobile devices, of a satellite-assisted navigation system (16) and are formed integrally with the respective associated user device (2),
**characterized in that** the correction service system (1) is designed to carry out a method according to one of Claims 1 to 6.

9. Satellite-assisted navigation system (16), having
- multiple satellites,
- user devices (2), and
- a correction service system (1) according to Claim 8.

## Revendications

1. Procédé permettant de faire fonctionner un système de service de correction (1) pour un système de navigation assisté par satellite (16) conçu pour déterminer une position d'appareils utilisateurs (2), comprenant plusieurs stations de référence (3) connues et présentant des coordonnées fixes dans un système de coordonnées, dans lequel
- un premier groupe des plusieurs stations de référence (3) et plusieurs récepteurs du système de service de correction (1) fonctionnent pour recevoir des signaux de satellite de plusieurs satellites du système de navigation assisté par satellite (16), dans lequel
- au moins une première valeur de correction (13) est établie en fonction des signaux de satellite reçus respectivement par les stations de référence du premier groupe des plusieurs stations de référence (3) et des coordonnées connues de la station de référence (3) respective du premier groupe des plusieurs stations de référence (3),
**caractérisé en ce que**
- au moins une deuxième valeur de correction (14) est établie au moyen des signaux de satellite reçus par les plusieurs récepteurs réalisés au moins partiellement comme des moyens de correction (17) à base de matériel et/ou de logiciel qui sont associés respectivement à l'un des appareils utilisateurs (2) réalisés sous forme d'unités de navigation dans des véhicules automobiles ou d'autres appareils mobiles et réalisés intégralement avec l'appareil utilisateur (2) respectivement associé, dans lequel
- au moins une troisième valeur de correction (15) est établie en fonction de ladite au moins une première et de ladite au moins une deuxième valeur de correction (13, 14), et dans lequel
- ladite au moins une troisième valeur de correction (15) est fournie à des appareils utilisateurs (2) du système de navigation assisté par satellite (16).

2. Procédé selon la revendication 1, **caractérisé en ce que** des divergences au moment de l'envoi des signaux de satellite en raison de certaines conditions dans la ionosphère et/ou la troposphère sont corrigées au moyen de ladite au moins une deuxième et/ou troisième valeur de correction (14, 15).

3. Procédé selon l'une quelconque des revendications précédentes, **caractérisé en ce que**
- les récepteurs d'un premier groupe des plusieurs récepteurs qui sont respectivement réalisés comme un moyen de correction (17) à base de matériel et/ou de logiciel du système de service de correction (1), qui est associé respectivement à un appareil utilisateur (2), sont pilotés pour surveiller les signaux de satellite reçus quant à un signal de satellite inattendu, dans lequel, lorsqu'un signal de satellite inattendu est détecté, une information concernant le signal de satellite inattendu est générée, et dans lequel ladite au moins une deuxième valeur de correction (14) est établie en tenant compte de l'information, et/ou
- ladite au moins une deuxième valeur de correction (14) n'est établie qu'en tenant compte des signaux de satellite reçus par les récepteurs du premier groupe des plusieurs récepteurs, réalisés respectivement sous forme de moyen de correction (17).

4. Procédé selon l'une quelconque des revendications précédentes, **caractérisé en ce que** ladite au moins une deuxième valeur de correction (14) est établie en fonction des signaux de satellite respectivement reçus par des récepteurs d'un deuxième groupe, au moins partiellement différent du premier groupe, des plusieurs récepteurs qui sont réalisés respectivement comme une station de référence (3) d'un deuxième groupe, au moins partiellement différent du premier groupe, des plusieurs stations de référence (3), et de coordonnées connues des récepteurs respectifs du deuxième groupe des plusieurs récepteurs.

5. Procédé selon l'une quelconque des revendications précédentes, **caractérisé en ce que** ladite au moins une deuxième et/ou troisième valeur de correction (14, 15) est/sont spécifiée(s) respectivement pour des signaux de satellite d'un ou de plusieurs des plusieurs satellites.

6. Procédé selon l'une quelconque des revendications précédentes, **caractérisé en ce que** ladite au moins une deuxième et/ou troisième valeur de correction (14, 15) est fournie aux appareils utilisateurs (2) au moyen d'au moins un satellite de communication (8) et/ou d'au moins un réseau radio mobile (6).

7. Procédé permettant de faire fonctionner un système de navigation assisté par satellite (16) comprenant plusieurs satellites, plusieurs appareils utilisateurs (2) et un système de service de correction (1), dans lequel le système de service de correction (1) présente plusieurs stations de référence (3) connues et présentant des coordonnées fixes dans un système de coordonnées et plusieurs récepteurs, dans lequel
- un premier groupe des plusieurs stations de référence (3) et plusieurs récepteurs du système de service de correction (1) fonctionnent pour recevoir des signaux de satellite de plusieurs satellites du système de navigation assisté par satellite (16), dans lequel
- au moins une première valeur de correction (13) est établie en fonction des signaux de satellite reçus respectivement par les stations de référence (3) du premier groupe des plusieurs stations de référence (3), et des coordonnées connues de la station de référence (3) respective du premier groupe des plusieurs stations de référence (3),
**caractérisé en ce qu'**un procédé permettant de faire fonctionner un système de service de correction (1) selon l'une quelconque des revendications 1 à 6 est effectué.

8. Système de service de correction (1), comprenant
- plusieurs stations de référence (3) connues et présentant des coordonnées fixes, et
- plusieurs récepteurs réalisés au moins partiellement comme des moyens de correction (17) à base de matériel et/ou de logiciel qui sont associés respectivement à un appareil utilisateur (2), réalisé sous la forme d'une unité de navigation dans des véhicules automobiles ou d'autres appareils mobiles, d'un système de navigation assisté par satellite (16), et réalisés intégralement avec l'appareil utilisateur (2) respectivement associé,
**caractérisé en ce que** le système de service de correction (1) est réalisé pour effectuer un procédé selon l'une quelconque des revendications 1 à 6.

9. Système de navigation assisté par satellite (16), comprenant
- plusieurs satellites,
- des appareils utilisateurs (2), et
- un système de service de correction (1) selon la revendication 8.
